# EUROPEAN PATENT APPLICATION

(11) **EP 4 429 004 A1**
(43) Date of publication of application: **11.09.2024**
(21) Application number: 22890400.9
(22) Date of filing: 03.11.2022
(51) Int. Cl.: H01M 50/249, H01M 50/242

(54) **CROSS MEMBER FOR BATTERY CASE AND BATTERY CASE**

(30) Priority: 05.11.2021 KR 20210151420
(71) Applicant: POSCO Co., Ltd, Pohang-si, Gyeongsangbuk-do 37859 (KR)
(72) Inventor: JUNG, Chang-Gyun, Incheon 21985 (KR); PARK, Jae-Heon, Incheon 21985 (KR); CHA, Myung-Hwan, Incheon 21985 (KR); WEE, Sang-Kwon, Incheon 21985 (KR)
(74) Representative: Zech, Stefan Markus
(86) International application number: PCT/KR2022/017115
(87) International publication number: WO 2023/080669

(57) **Abstract**

The present invention provides a cross member for a battery case. The cross member comprises: a first frame part; a second frame part; and a connection frame part arranged between the first frame part and the second frame part to connect the first frame part with the second frame part, wherein the connection frame part is made of a material different from those of the first frame part and the second frame part.

## Description

### Technical Field

The present disclosure relates to a cross member for a battery case, and the battery case.

### Background Art

It should be noted that the contents described in this section merely provide background information on the present disclosure and do not constitute the prior art.

A battery case for electric vehicle serves to protect a battery cell from external shocks occurring in driving the vehicle. In a front/rear collision of the vehicle, it is relatively easy to prepare for a collision because components of a vehicle body are stacked in layers in front of and behind the battery case. However, in a lateral collision, there is no protective structure, other than a sill side of the vehicle body, so the battery case itself should be designed to strongly resist lateral collisions.

Among structural components of the battery case, representative members responding to the lateral collision may include a side frame and a cross member. The side frame may be a member that serves as a side border of the battery case and primarily resists the collision. The cross member may be perpendicular to the side frame, and may cross an internal space of the battery case. The cross member may be mainly disposed between battery modules, and may serve to support the side frame.

(Patent Document 1) KR 10-0818057 B1

### Summary of Invention

### Technical Problem

An aspect of the present disclosure is to provide a cross member for a battery case, and the battery case, that may improve collision resistance performance while achieving a decrease in weight of the battery case.

### Solution to Problem

As an aspect for achieving the above object, the present disclosure provides a cross member of a battery case including a first frame portion; a second frame portion; and a connection frame portion disposed between the first frame portion and the second frame portion and connecting the first frame portion and the second frame portion, wherein the connection frame portion is formed of a material, different from a material of the first frame portion and a material of the second frame portion.

The first frame portion and the second frame portion may be formed of a first material, and the connection frame portion may be formed of a second material, different from the first material.

The first frame portion, the second frame portion, and the connection frame portion may be formed of a metal material, and a specific gravity of the connection frame portion may be smaller than a specific gravity of the first frame portion and the second frame portion.

Preferably, a first thickness of the first frame portion and a second thickness of the second frame portion may be smaller than a third thickness of the connection frame portion.

The first frame portion and the second frame portion may be formed of a steel material, and the connection frame portion may be formed of an aluminum material or an aluminum alloy material.

The connection frame portion may include a connection body; a first insertion groove formed on one side of the connection body and into which one side of the first frame portion is inserted; and a second insertion groove formed on the other side of the connection body and into which one side of the second frame portion is inserted.

An up and down direction length of the first frame portion may be greater than an up and down direction length of the second frame portion, and a first depth of the first insertion groove may be greater than a second depth of the second insertion groove.

The cross member in which the connection body may include a 'H-shaped' cross-section.

The first frame portion may include a first frame body of which lower portion is inserted into the first insertion groove and including a 'U-shaped' cross-section; and a pair of first flanges respectively extending in an outward direction of an installation width of the first frame body from an upper side of the first frame body.

The first frame body and the pair of first flanges may be formed by bending a single plate in multiple stages.

The second frame portion may include a second frame body of which upper portion is inserted into the second insertion groove and including an `inverted U-shaped' cross-section; and a pair of second flanges respectively extending in an outward direction of an installation width of the second frame body from a lower side of the second frame body.

The second flange may include a 2-1 horizontal plate extending from the lower side of the second frame body in an outward direction; a second vertical plate intersecting the 2-1 horizontal plate and extending from the 2-1 horizontal plate in a downward direction; and a 2-2 horizontal plate intersecting the second vertical plate and extending from a lower side of the second vertical plate in an outward direction.

The second flange may include a second reinforcing member having a 'c-shaped' cross-section opened in a direction facing a second side plate of the second frame body, and forming a closed cross-section together with the second side plate; and a second bonding plate bonded to the second side plate in a state bent from the second reinforcing member and disposed parallel to contact the second side plate.

The second frame body and the pair of second flanges may be formed by bending a single plate in multiple stages.

The cross member may further include a fastening portion fastened through the first frame portion, the second frame portion, and the connection frame portion.

As another aspect for achieving the above object, the present disclosure provides a battery case including a side member installed to surround a border portion; and the cross member of any one of claims 1 to 15 connecting opposing side portions of the side member respectively extending in left and right directions, and installed in plural to be spaced apart in front and rear directions.

### Advantageous Effects of Invention

According to an aspect of the present disclosure, there may be an effect of improving collision resistance performance while achieving a decrease in weight of the battery case.

### Brief Description of Drawings

FIG. 1 is a perspective view illustrating a cross member according to a first embodiment of the present disclosure.
FIG. 2 is a perspective view illustrating an exploded state of FIG. 1.
FIG. 3 is a cross-sectional view of FIG. 1.
FIG. 4 is a cross-sectional view illustrating an exploded state of FIG. 3.
FIG. 5 is a cross-sectional view of a cross member according to a second embodiment of the present disclosure.
FIG. 6 is a perspective view illustrating a cross member according to a third embodiment of the present disclosure.
FIG. 7 is a cross-sectional view of FIG. 6.
FIG. 8 is a numerical analysis diagram of load performance of a cross member according to a first embodiment of the present disclosure and a cross member according to a comparative example of the present disclosure.
FIG. 9 is a view comparing load performance (ordinate: compressive strength, unit - KN, abscissa: time, unit - ms) of a cross member according to a first embodiment of the present disclosure and a cross member according to a comparative example of the present disclosure.
FIG. 10 is a perspective view illustrating a battery case of the present disclosure.

### Best Mode for Invention

Hereinafter, preferred embodiments of the present disclosure will be described with reference to the attached drawings. However, embodiments of the present disclosure may be modified into various other embodiments, and the scope of the present disclosure is not limited to embodiments described below. Additionally, embodiments of the present disclosure may be provided to more completely explain the present disclosure to those with average knowledge in the relevant technical field. Shapes and sizes of elements in the drawings may be exaggerated for clearer explanation.

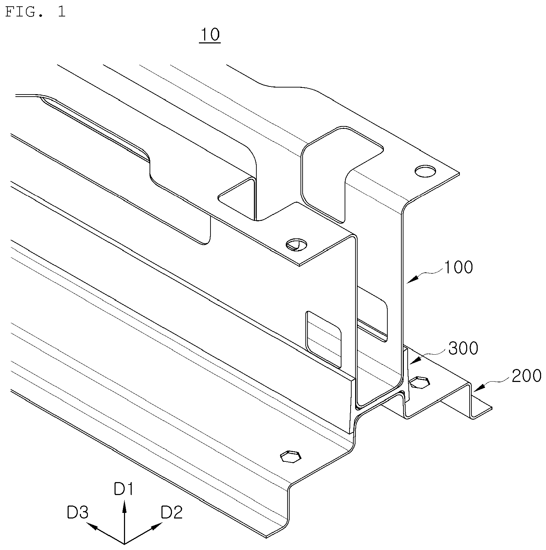

Hereinafter, components included in a cross member 10 of a battery case according to a first embodiment of the present disclosure will be described in detail with reference to FIGS. 1 to 4.

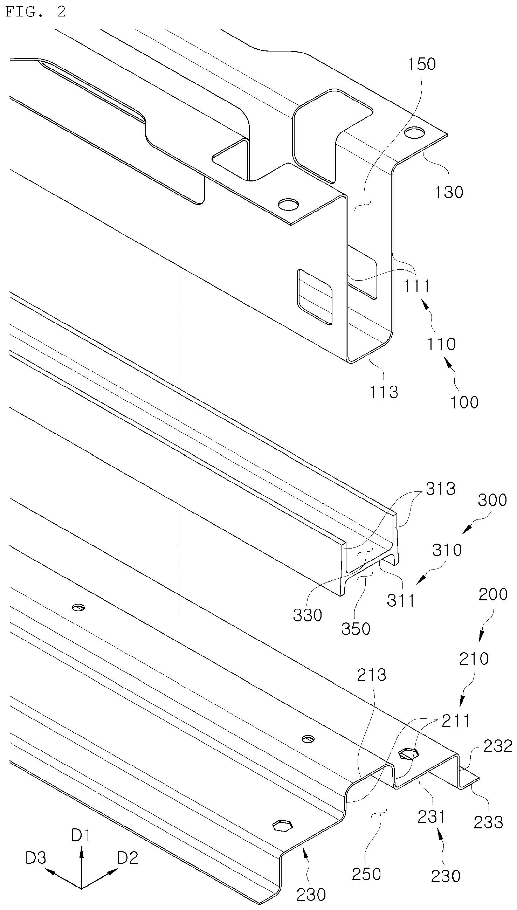

FIG. 1 is a perspective view illustrating a cross member 10 of a battery case according to a first embodiment of the present disclosure. FIG. 2 is a perspective view illustrating an exploded state of FIG. 1.

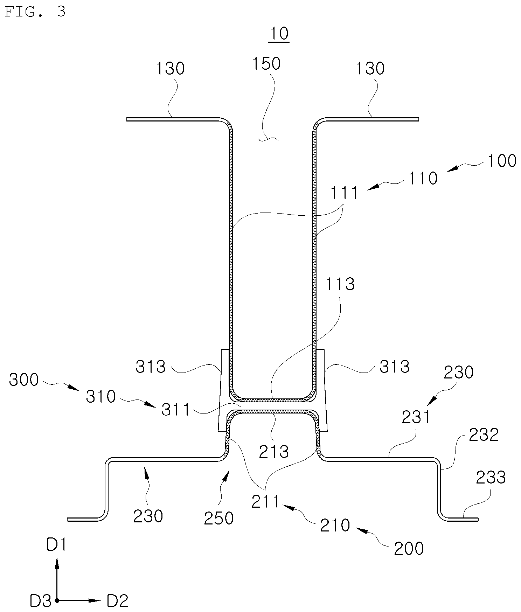

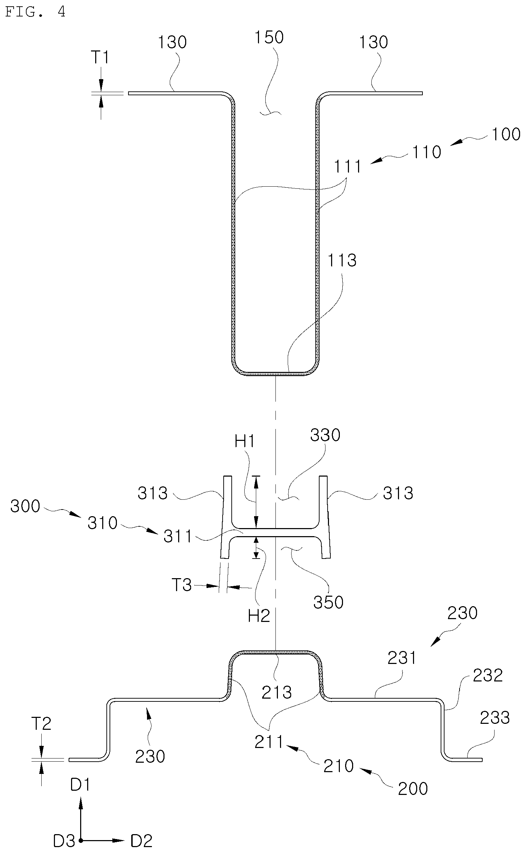

FIG. 3 is a cross-sectional view of FIG. 1. FIG. 4 is a cross-sectional view illustrating an exploded state of FIG. 3.

A cross member 10 of a battery case according to a first embodiment of the present disclosure may include a first frame portion 100, a second frame portion 200, and a connection frame portion 300.

The first frame portion 100 may be disposed on an upper side.

The second frame portion 200 may be disposed on a lower side, and may be coupled to a lower plate of the battery case.

The connection frame portion 300 may be disposed between the first frame portion 100 and the second frame portion 200 to connect the first frame portion 100 and the second frame portion 200.

The first frame portion 100, the connection frame portion 300, and the second frame portion 200 may be arranged in an up and down direction D1, and the connection frame portion 300 may connect the first frame portion 100 and the second frame portion 200.

The first frame portion 100 and the second frame portion 200 may be coupled to each other while being inserted into an insertion groove of the connection frame portion 300.

The first frame portion 100 and the second frame portion 200 may be connected while inserted into the insertion groove formed in the connection frame portion 300. Therefore, there may be an effect of improving workability in the field, since members may be connected in a simple method of insertion by an operator.

The connection frame portion 300 may be formed of a material, different from a material of the first frame portion 100 and a material of the second frame portion 200.

In this case, the different material refers to different materials, such as a steel material and aluminum.

The first frame portion 100 and the second frame portion 200 may be formed of the same material.

For example, when the first frame portion 100 and the second frame portion 200 are formed of steel materials, and the first frame portion 100 and the second frame portion 200 may be formed of steel materials having different strengths, it may be considered as being formed of the same material.

The first frame portion 100 and the second frame portion 200 may be formed of steel materials, and a strength of the first frame portion 100 may be equal to a strength of the second frame portion 200.

The cross member 10 of the battery case may be composed of the connection frame portion 300 and the first and second frame portions, having different materials, to have effects of ensuring a sufficient strength of the cross member 10 of the battery case and reducing a weight of the cross member 10 of the battery case.

The cross member 10 of the battery case may support compressive stress, and may support a battery module (not illustrated) installed in the battery case.

The cross member 10 of the battery case may be configured such that the first frame portion 100, the second frame portion 200, and the connection frame portion 300 are manufactured separately, and are disassembled and assembled.

For example, the cross member 10 of the battery case may be detachably coupled to the first frame portion 100, the second frame portion 200, and the connection frame portion 300.

The first frame portion 100 and the second frame portion 200 may be formed of a first material, and the connection frame portion 300 may be formed of a second material, different from the first material.

The first material and the second material may be metal materials, and the first material may have a specific gravity, greater than a specific gravity of the second material.

For example, the specific gravity of the first material may be greater than the specific gravity of the second material.

The first frame portion 100, the second frame portion 200, and the connection frame portion 300 may be formed of a metal material, and a specific gravity of the connection frame portion 300 may be lower than the specific gravity of the first frame portion 100 and the specific gravity of the second frame portion 200.

A first thickness T1 of the first frame portion 100 and a second thickness T2 of the second frame portion 200 may be smaller than a third thickness T3 of the connection frame portion 300.

To increase a compressive strength of the cross member 10 of the battery case, a strength of an applied material may increase or a thickness of the material may increase.

When thicknesses of the first and second frame portions formed of the first material having a greater specific gravity increase, a weight thereof may become excessive. Therefore, a compressive strength-to-weight ratio may be improved by increasing the thickness of the connection frame portion formed of a second material having a smaller specific gravity.

The cross member 10 of the battery case may receive a compressive load. Therefore, as a thicker member is used for the cross member 10 of the battery case, it may be advantageous in improving an initial strength. However, when a material having a greater specific gravity is thickened, there may be a problem that a weight of the cross member 10 of the battery case becomes excessive.

Therefore, there may be effects of reducing a weight while improving a compressive strength-to-weight ratio by applying the second material having a relatively small specific gravity to the connection frame portion 300 and increasing a thickness of the connection frame portion 300, and ensuring a sufficient compressive strength by decreasing thicknesses of the first and second frame portions formed of the first material having a greater specific gravity.

The first frame portion 100 may be composed of a first blank having a first thickness T1, and the second frame portion 200 may be composed of a second blank having a second thickness T2.

For example, the first thickness T1 of the first blank may be equal to the second thickness T2 of the second blank.

The first blank and the second blank may be formed of a plate material, and the first frame portion 100 may be formed by bending the first blank in multiple stages, and the second frame portion 200 may be formed by bending the second blank in multistage.

The connection frame portion 300 may be composed of a third blank having a third thickness T3.

The first frame portion 100 and the second frame portion 200 may be formed of a steel material, and the connection frame portion 300 may be formed of an aluminum material or an aluminum alloy material.

For example, the first frame portion 100 and the second frame portion 200 may be formed of the steel material, and may be formed of the same steel type.

As another example, the first frame portion 100 and the second frame portion 200 may be formed of a steel material, and may be formed of different steel types having different strengths.

When a structural member such as the cross member 10 of the battery case or the like receives an external shock, the structural member may be compressed locally and may begin to collapse, causing various deformations such as bending or the like.

After the structural member is compressed, as time passes, balance of forces may be broken and buckling may occur at a specific site. This point may be called a plastic hinge. When the plastic hinge occurs, the structural member may no longer function as a structural material, and may collapse.

Therefore, to increase resistance to initial compression, a point in time of occurrence of the plastic hinge should be delayed as much as possible. to delay the plastic hinge, a strength and a thickness should be increased. In particular, an increase in the thickness may be advantageous.

In the aluminum material, it may be very advantageous in compressive stress resistance because the aluminum material has a low specific gravity, and may be applied thickly, but there may be a problem of greatly increasing manufacturing costs because the aluminum material is more expensive than the steel material.

When deformation occurs due to collision of the steel material (iron and steel material), loads of various modes such as bending, tension, or the like as well as compression may be applied. In this case, the steel material having a high strength may be more advantageous.

In the steel material (iron and steel material), since a weight thereof is high, a thin material having a high strength may be applied. Therefore, since a thickness thereof may be very small, resistance to compression may be low, and a plastic hinge may quickly occur.

In evaluating a battery case, the evaluation may be carried out at an initial deformation when not much deformation occurs, and, in this case, compression may be mainly applied. Therefore, it may be advantageous to increase a thickness by using a low specific gravity material such as aluminum or the like, and this may be one of the important reasons why the battery case is mainly manufactured from aluminum.

The cross member 10 of the battery case in the first embodiment may maximize material efficiency by taking advantage of both the aluminum material and the steel material.

The aluminum material may be mainly disposed on a region to which compression is applied, and the steel material may be disposed on a region to which other stresses such as tension or the like are applied.

In the cross member 10 of the battery case of the first embodiment, material costs may be significantly reduced (usually about 70% reduced), as compared to those formed of 100% aluminum material.

Assembly costs of the cross member 10 of the battery case of the first embodiment may increase slightly, but a reduction in material costs may be much greater than those formed of 100% aluminum material. Therefore, there may be an effect of significantly saving entire manufacturing costs of the cross member 10 of the battery case.

The connection frame portion 300 may include a connection body 310, a first insertion groove 330, and a second insertion groove 350.

The first insertion groove 330 may be formed on one side of the connection body 310, and one side of the first frame portion 100 may be inserted thereinto.

The second insertion groove 350 may be formed on the other side of the connection body 310, and one side of the second frame portion 200 may be inserted thereinto.

A first frame body 110 of the first frame portion 100 may be inserted into the first insertion groove 330, and in a state in which the first frame body 110 of the first frame portion 100 is inserted into the first insertion groove 330, the first frame portion 100, the second frame portion 200, and the connection frame portion 300 may be coupled.

The first insertion groove 330 may be formed in a `U-shape' opened in an upward direction, and the second insertion groove 350 may be formed in an `inverted U-shape' opened in a downward direction.

A first open section 150 opened in an opposite direction to which the first frame portion 100 is inserted into the first insertion groove 330, may be formed in the first frame portion 100, and a second open section 250 opened in an opposite direction to which the second frame portion 200 is inserted into the second insertion groove 350, may be formed in the second frame portion 200.

An up and down direction (D1) length of the first frame portion 100 may be greater than an up and down direction (D1) length of the second frame portion 200, and a first depth H1 of the first insertion groove 330 may be greater than a second depth H2 of the second insertion groove 350.

Therefore, the first frame portion 100 having a long length in the up and down direction D1 may be installed while being stably accommodated in the first insertion groove 330.

Of course, when the up and down direction (D1) length of the first frame portion 100 is equal to the up and down direction (D1) length of the second frame portion 200, the first depth H1 of the first insertion groove 330 may be equal to the second depth H2 of the second insertion groove 350.

The connection body 310 may include an 'H-shaped' cross-section.

The connection body 310 may include a connection plate 311 and a pair of connection side plates 313.

As the pair of connection side plates 313 are connected in left and right directions D2 with the connection plate 311 therebetween, the connection body 310 may form an 'H-shaped' cross-section. The connection plate 311 may connect the pair of connection side plates 313 in the up and down direction D1.

Of course, the connection body 310 may include additional components, in addition to the connection plate 311 and the pair of connection side plates 313.

The first frame portion 100 may include a first frame body 110 and a pair of first flanges 130.

The first frame body 110 may have a lower portion inserted into the first insertion groove 330, and may include a 'U-shaped' cross-section.

The first frame body 110 may include a first insertion plate 113 and a pair of first side plates 111.

The first insertion plate 113 may be disposed to face the connection plate 311 of the connection frame portion 300, in a state in which the first frame body 110 is inserted into the first insertion groove 330. For example, the first insertion plate 113 and the connection plate 311 may be disposed in contact with each other, and the first insertion plate 113 and the connection plate 311 may be in surface contact.

The first side plates 111 may be formed to extend upwardly from both end portions of the first insertion plate 113 in the left and right directions D2.

The first side plates 111 and the connection side plate 313 may be disposed in contact with each other. The first side plates 111 and the connection side plate 313 may be in surface contact.

The first flanges 130 may be formed to extend in an outward direction of an installation width of the first frame body 110 from an upper side of the first frame body 110.

The first frame body 110 and the pair of first flanges 130 may be formed by bending a single plate in multiple stages.

The second frame portion 200 may include a second frame body 210 and a pair of second flanges 230.

The second frame body 210 may have an upper portion inserted into the second insertion groove 350, and may include an `inverted U-shaped' cross-section.

The second frame body 210 may include a second insertion plate 213 and a pair of second side plates 211.

The second insertion plate 213 may be disposed to face the connection plate 311 of the connection frame portion 300 in a state in which the second frame body 210 is inserted into the second insertion groove 350. For example, the second insertion plate 213 and the connection plate 311 may be disposed in contact with each other. The second insertion plate 213 and the connection plate 311 may be in surface contact.

The second side plate 211 may be formed to extend downwardly from both end portions of the second insertion plate 213 in the left and right directions D2.

The second side plates 211 and the connection side plate 313 may be disposed in contact with each other. The second side plates 211 and the connection side plate 313 may be in surface contact.

The second side plates 211 may be formed to be spread outwardly by about 1 to 2 degrees in a vertical direction such that the battery module is easily inserted.

The second flange 230 may respectively extend in an outward direction of an installation width of the second frame body 210 from a lower side of the second frame body 210.

The second flange 230 may be connected to a lower plate of the battery case.

The second flange 230 may include a 2-1 horizontal plate 231, a second vertical plate 232, and a 2-2 horizontal plate 233.

The 2-1 horizontal plate may be formed to extend from the lower side of the second frame body 210 in an outward direction.

The second vertical plate 232 may be formed to intersect the 2-1 horizontal plate 231, and extend from the 2-1 horizontal plate 231 in a downward direction.

The 2-2 horizontal plate 233 may be formed to intersect the second vertical plate 232, and extend from the lower side of the second vertical plate 232 in an outward direction.

The lower plate of the battery case may be connected to the 2-2 horizontal plate 233.

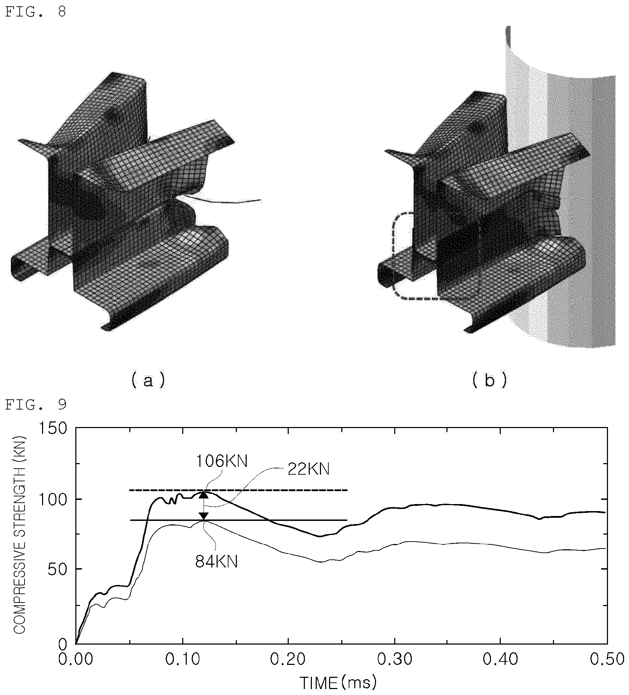

As another example, the 2-2 horizontal plate 233 may be formed to intersect the second vertical plate 232, and extend in a direction, intersecting from the second vertical plate 232 (see portion (b) of FIG. 8).

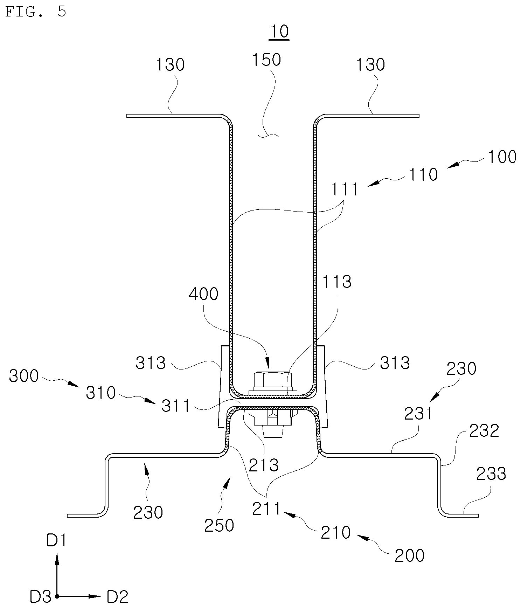

Hereinafter, components included in a cross member 10 of a battery case according to a second embodiment of the present disclosure will be described in detail with reference to FIG. 5.

FIG. 5 is a cross-sectional view of a cross member 10 of a battery case according to a second embodiment of the present disclosure.

A cross member 10 of a battery case according to a second embodiment may be identical to the cross member 10 of the battery case of the first embodiment described above, except that a fastening portion 400 is adopted.

A cross member 10 of a battery case may further include a fastening portion 400.

The fastening portion 400 may be fastened by penetrating a first frame portion 100, a second frame portion 200, and a connection frame portion 300.

The fastening portion 400 may be composed of a bolt member fastened through the first frame portion 100, the second frame portion 200, and the connection frame portion 300.

Specifically, the fastening portion 400 be composed of a bolt member fastened through a first insertion plate 113 of the first frame portion 100, a connection plate 311 of the connection frame portion 300, and a second insertion plate 213 of the second frame portion 200.

As another example, the cross member 10 of the battery case may be fixed to the first frame portion 100, the second frame portion 200, and the connection frame portion 300 by welding or an adhesive.

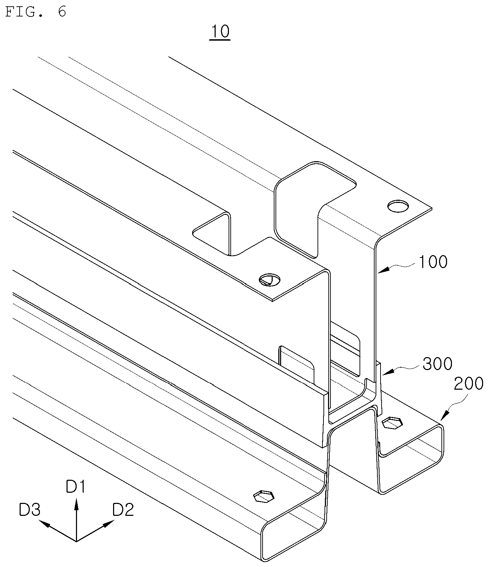

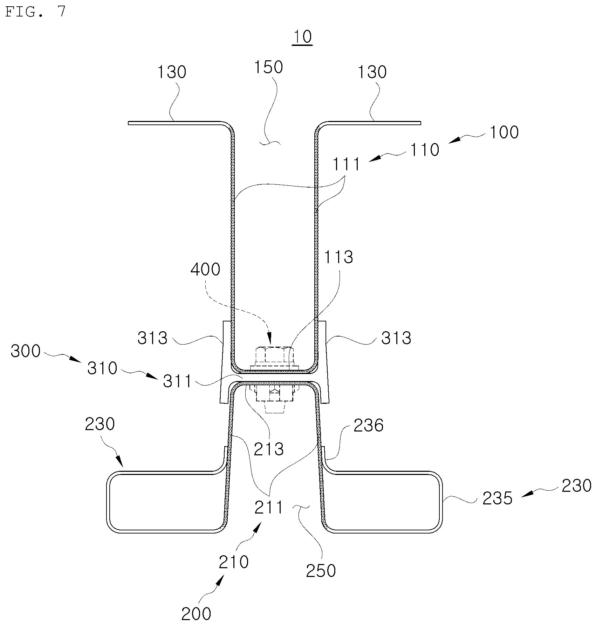

Hereinafter, components included in a cross member 10 of a battery case according to a third embodiment of the present disclosure will be described in detail with reference to FIGS. 6 and 7.

FIG. 6 is a perspective view illustrating a cross member 10 of a battery case according to a third embodiment of the present disclosure, and FIG. 7 is a cross-sectional view of FIG. 6.

A cross member 10 of a battery case according to a third embodiment may be identical to the cross member 10 of the battery case of the first embodiment described above, except that a second flange 230 of a second frame portion 200 is different from those of the first embodiment.

A second flange 230 may include a second reinforcing member 235 and a second bonding plate 236.

The second reinforcing member 235 may have a `c-shaped' cross-section opened in a direction facing a second side plate 211 of a second frame body 210, and may form a closed cross-section together with the second side plate 211.

The second bonding plate 236 may be bonded to the second side plate 211 in a state bent from the second reinforcing member 235 and disposed parallel to contact the second side plate 211.

The second reinforcing member 235 and the second side plate 211 may together form a closed cross-section having a tetragonal shape.

The second frame portion 200 may form a closed cross-section by the second reinforcing member 235 and the second side plate 211, to have an effect of greatly improving rigidity.

A second frame portion 200 may include a second frame body 210 and a pair of second flanges 230, and the second bonding plate 236 may be respectively bonded to the second side plate 211 to form two closed cross-sections.

The second frame body 210 and the pair of second flanges 230 may be formed by bending a single plate in multiple stages.

Hereinafter, with reference to FIGS. 8 and 9, load performance of the cross member 10 of the battery case according to the first embodiment of the present disclosure and load performance of a cross member 10 of a battery case according to a comparative example of the present disclosure will be compared.

Portion (a) of FIG. 8 is a numerical analysis diagram of load performance of a cross member 10 of a battery case according to a comparative example of the present disclosure, and portion (b) of FIG. 8 is a numerical analysis diagram of load performance of a cross member 10 of a battery case according to a first embodiment of the present disclosure

FIG. 9 is a view comparing load performance (ordinate: compressive strength, unit - KN, abscissa: time, unit - ms) of a cross member 10 of a battery case according to a comparative example of the present disclosure and a cross member 10 of a battery case according to a first embodiment of the present disclosure.

A cross member 10 of a battery case according to a comparative example of the present disclosure may be a structure in which components corresponding to the first frame portion 100 and the second frame portion 200 of the first embodiment are directly bonded by welding or bolting.

In addition, the cross member 10 of the battery case of the first embodiment and the cross member 10 of the battery case of the comparative example were formed in an equivalent level of weight.

In the first embodiment, compressive load is 106 KN, and in the comparative example, compressive load is 84 KN. It can be seen that the compressive load of the first embodiment increased by 22 KN, as compared to the comparative example. For example, the first embodiment may have an effect of improving compressive load, as compared to the comparative example, while maintaining a weight on an equivalent level.

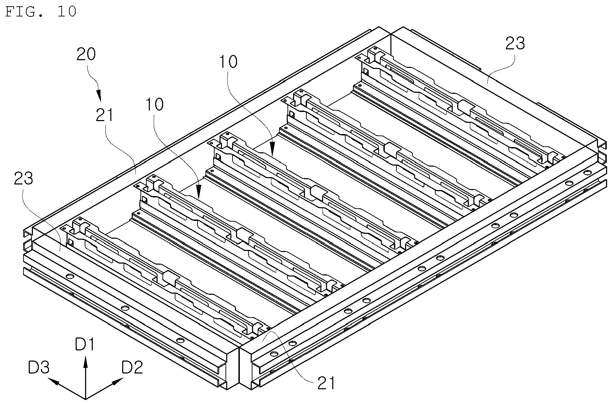

Next, a battery case will be described in detail with reference to FIG. 10.

FIG. 10 is a perspective view illustrating a battery case of the present disclosure.

A battery case according to an embodiment of the present disclosure may include a side member 20 and a cross member 10 of the battery case.

The side member 20 may be installed to surround a border portion.

Side portions 21 of the side member 20 may be formed to extend in front and rear directions D3, and may be installed as a pair spaced apart in left and right directions D2.

An upper plate forming an upper surface of the battery case may be detachably coupled to the side member 20.

A front-rear portion 23 of the side member 20 may be formed to extend in the left and right directions D2, and may be installed as a pair spaced apart in the front and rear directions D3. The front-rear portion 23 may connect a pair of side portions 21 while being bonded by welding or the like.

The cross member 10 of the battery case may be formed to extend in the left and right directions D2 to connect opposing side portions 21 of the side members 20, and may be installed in plural spaced apart in the front and rear directions D3.

The cross member 10 of the battery case may be installed in the side member 20, and may be configured connect two opposing side portions 21 of the side member 20 to mainly resist impact applied in a lateral direction.

The cross member 10 of the battery case may be installed to connect internal sides of the pair of side portions 21. For example, the cross member 10 and the side portions 21 of the battery case may be connected by welding.

The cross member 10 of the battery case may be installed to intersect the side portions 21. For example, the cross member 10 of the battery case may be installed to intersect the side portions 21 perpendicularly.

A lower plate forming a bottom surface of the battery case may be coupled to the cross member 10 of the battery case.

In addition, of course, various embodiments of a cross member 10 of a battery case having various embodiments described above may be applied to a battery case of the present disclosure.

Therefore, since the configuration of the first frame portion 100, the second frame portion 200, and the connection frame portion 300 of the cross member 10 of the battery case used in the battery case is already described, the cross member of the battery case, detailed description thereof will be omitted to avoid duplication.

While example embodiments have been illustrated and described above, it will be apparent to those skilled in the art that modifications and variations could be made without departing from the scope of the present disclosure as defined by the appended claims.

### [DESCRIPTION OF REFERENCE CHARACTERS]

10: CROSS MEMBER 20: SIDE MEMBER
21: SIDE PORTION 23: FRONT-REAR PORTION
100: FIRST FRAME PORTION 110: FIRST FRAME BODY
111: FIRST SIDE PLATE 113: FIRST INSERTION PLATE
130: FIRST FLANGE 150: FIRST OPEN SECTION
200: SECOND FRAME PORTION 210: SECOND FRAME BODY
211: SECOND SIDE PLATE 213: SECOND INSERTION PLATE
230: SECOND FLANGE 231: 2-1 HORIZONTAL PLATE
232: SECOND VERTICAL PLATE 233: 2-2 HORIZONTAL PLATE
235: SECOND REINFORCING MEMBER 236: SECOND BOND PLATE
250: SECOND OPEN SECTION 300: CONNECTION FRAME PORTION
310: CONNECTION BODY 311: CONNECTION PLATE
313: CONNECTION SIDE PLATE 330: FIRST INSERTION GROOVE
350: SECOND INSERTION GROOVE 400: FASTENING PORTION
D1: UP AND DOWN DIRECTION D2: LEFT AND RIGHT DIRECTIONS
D3: FRONT AND REAR DIRECTIONS H1: FIRST DEPTH
H2: SECOND DEPTH T1: FIRST THICKNESS
T2: SECOND THICKNESS T3: THIRD THICKNESS

## Claims

1. A cross member of a battery case comprising:
a first frame portion;
a second frame portion; and
a connection frame portion disposed between the first frame portion and the second frame portion and connecting the first frame portion and the second frame portion,
wherein the connection frame portion is formed of a material, different from a material of the first frame portion and a material of the second frame portion.

2. The cross member of claim 1, wherein the first frame portion and the second frame portion are formed of a first material, and the connection frame portion is formed of a second material, different from the first material.

3. The cross member of claim 1, wherein the first frame portion, the second frame portion, and the connection frame portion are formed of a metal material, and
a specific gravity of the connection frame portion is smaller than a specific gravity of the first frame portion and the second frame portion.

4. The cross member of claim 3, wherein a first thickness of the first frame portion and a second thickness of the second frame portion are smaller than a third thickness of the connection frame portion.

5. The cross member of claim 1, wherein the first frame portion and the second frame portion are formed of a steel material, and the connection frame portion is formed of an aluminum material or an aluminum alloy material.

6. The cross member of claim 1, wherein the connection frame portion comprises:
a connection body;
a first insertion groove formed on one side of the connection body and into which one side of the first frame portion is inserted; and
a second insertion groove formed on the other side of the connection body and into which one side of the second frame portion is inserted.

7. The cross member of claim 6, wherein an up and down direction length of the first frame portion is greater than an up and down direction length of the second frame portion, and
a first depth of the first insertion groove is greater than a second depth of the second insertion groove.

8. The cross member of claim 6, wherein the connection body comprises an 'H-shaped' cross-section.

9. The cross member of claim 6, wherein the first frame portion comprises:
a first frame body of which lower portion is inserted into the first insertion groove and including a 'U-shaped' cross-section; and
a pair of first flanges respectively extending in an outward direction of an installation width of the first frame body from an upper side of the first frame body.

10. The cross member of claim 9, wherein the first frame body and the pair of first flanges are formed by bending a single plate in multiple stages.

11. The cross member of claim 6, wherein the second frame portion comprises:
a second frame body of which upper portion is inserted into the second insertion groove and including an `inverted U-shaped' cross-section; and
a pair of second flanges respectively extending in an outward direction of an installation width of the second frame body from a lower side of the second frame body.

12. The cross member of claim 11, wherein the second flange comprises:
a 2-1 horizontal plate extending from the lower side of the second frame body in an outward direction;
a second vertical plate intersecting the 2-1 horizontal plate and extending from the 2-1 horizontal plate in a downward direction; and
a 2-2 horizontal plate intersecting the second vertical plate and extending from a lower side of the second vertical plate in an outward direction.

13. The cross member of claim 11, wherein the second flange comprises:
a second reinforcing member having a 'c-shaped' cross-section opened in a direction facing a second side plate of the second frame body, and forming a closed cross-section together with the second side plate; and
a second bonding plate bonded to the second side plate in a state bent from the second reinforcing member and disposed parallel to contact the second side plate.

14. The cross member of claim 11, wherein the second frame body and the pair of second flanges are formed by bending a single plate in multiple stages.

15. The cross member of claim 1, further comprising a fastening portion fastened through the first frame portion, the second frame portion, and the connection frame portion.

16. A battery case comprising:
a side member installed to surround a border portion; and
the cross member of any one of claims 1 to 15 connecting opposing side portions of the side member respectively extending in left and right directions, and installed in plural to be spaced apart in front and rear directions.
